# EUROPEAN PATENT SPECIFICATION

(11) **EP 3 244 596 B1**
(45) Date of publication and mention of the grant of the patent: **21.12.2022**
(21) Application number: 16168670.4
(22) Date of filing: 09.05.2016
(51) Int. Cl.: H04M 1/04, H04M 1/72475, H02J 7/00, H02J 7/34, H02J 50/10

(54) **A MULTIPURPOSE COMMUNICATION AND CONTROL SYSTEM WITH A TANGIBLE USER INTERFACE**
MEHRZWECKKOMMUNIKATION UND STEUERUNGSSYSTEM MIT EINER GREIFBAREN BENUTZERSCHNITTSTELLE
SYSTÈME DE COMMUNICATION ET DE COMMANDE MULTIFONCTIONNEL AVEC UNE INTERFACE UTILISATEUR TANGIBLE

(43) Date of publication of application: 15.11.2017
(73) Proprietor: iResTech Ltd., 2414 Nicosia (CY)
(72) Inventor: Chrysouliotis, Polys, 2414 Engomi (CY); Demetriou, Markos, 2414 Engomi (CY); Philimis, Panayiotis, 2414 Engomi (CY)
(74) Representative: Lawrence, Richard Anthony

(56) References cited:
- EP-A1- 2 600 485
- US-A1- 2012 139 690

## Description

### Technical Field

This invention falls in the telecommunication and assistive technology sectors. Specifically, the invention makes a mobile communications device and its features accessible to users that perceive digital and physical user interfaces and navigation as complicated, whilst offering further home assistive elements for the benefit of both the user and their carer(s).

### Background Art

There are an increasing number of people who are struggling to keep up with the modern technologies offered in our societies, either due to physical and cognitive limitations related to age or genetics, or due to the perceived complexity in navigating through the physical and digital interfaces.

Currently, there are simplified or modified versions of mobile communications devices, that do not however properly address the numerous issues that these users are facing, nor do they address the issues in batches, focusing instead on individual problems, to the economic expense of the user and their potential carers who are responsible for their wellbeing.

In reference to the use of Near Field Communication for device function control in relation to prior art, the following work may be considered relevant. US20130203348A1 includes using NFC for locking and unlocking devices or doors for prevention of unauthorised use. US8929811B2 analyses the NFC tag header information to install and execute an application or retrieve an application list so as to control the operations only via the tag information. In WO2006111782A1 an application launching table and preset device identification are used for launching preset application in mobile terminal. WO 2012159673A1 retrieves data from an NFC tag in order to provide user assistance information. US8988194B2 includes the controlling of an electronic device using a different external device. In WO2011103684A1 the performing of different mobile operations with spaced apart NFC sensors based on timing and sequence in which sensors communicated with the device, and in WO2014091441A1, mobile functions are controlled via mobile movement and interaction with a NFC sensor. In WO 2010018468 A1-US 8422944 B2 NFC signals are send and received to modify settings and initiate the function of a wireless terminal. Lastly, in WO2007129253A1 an emergency call sensing apparatus is described and in WO2014202826A1 an apparatus for wireless charging using proximity indications through NFC is detailed. Aforementioned patents are focused on a single issue and have not taken into consideration various limitations in respect to a particular social group.

CN 204463142 U uses images for device function control, is an NFC based education entertainment system, where pictures are used to label each NFC chip function. No special considerations were made in the presentation and grouping of the images, nor is there a dedicated system to execute the said images.

US8768318B2 is using a tangible user interface and communication device for multiple external object control, is a docking station for an enhanced user interface for mobile devices, and where video or audio signals are transmitted through the interface. Once more, no special considerations were made in reference to how the approach would be easily accessible and relatable to a specific social group.

US2012139690A1 describes a method for operating a computing device, as for example a smart phone, comprising reading the value of a tag using proximity-based radio and selecting and running an application based on the value of that tag. In essence, US2012139690A1 describes a context dependent computing device. The value read from a tag provides an indication of the desired operation. For example, when the device is near a tag that contains information about launching a telephone calling application to call a specific number the device could launch a telephone calling application. This is certainly a useful feature for helping groups of people such as the elderly to call their loved ones for example. Nevertheless, it is far from providing a complete system that caters for the communication needs of the elderly or other people that needs assistance. For these groups of people, a fixed reference point, the utilisation of habits, and the monitoring of various conditions that can indicate a problem are important parameters for a successful implementation and for serving their needs.

The present invention is different from prior art by dedicating its functionality on the elimination of any perceived user interface complications and grouping numerous functions together on a clearly labelled tangible user interface for an intuitive lifestyle improvement to the user(s) and carer(s).

The present invention is a system that offers various communicative, notification, entertainment and house control features, that addresses the issues mentioned above, while at the same time eliminating the perceived complexity in physical and digital interface navigation.

The present invention also helps in forming habits, such as placing the MCD on a specific spot, acknowledging that habits are very important for this user group.

### Summary of invention

The invention is directed to the subject-matter of the independent claims. Advantageous embodiments are set out in the dependent claims.

The present invention is a communication and control system adapted to execute multiple tasks, communicative, notification, entertainment and house control comprising of a Mobile Communications Device **(MCD)** and a Tangible User Interface **(TUI)** for the user that perceives physical and digital navigations in modern devices to be too complicated, and their potential carers, who are either family, friends or employed professionals and are responsible for their well-being.

The TUI may be in the form of a light, portable base, encasing a wireless charging unit connected with a wire to an internal battery pack, with an additional extendable wire for charging the said battery pack, with NFC tags arranged on the top surface of the TUI, on top of which are images of persons or tasks, covered by a protective layer. The wireless charging unit, allows the user to place the MCD on the TUI's allocated charging spot, for the wireless powering of the MCD to take place. The images are arranged according to some grouping that are related to the aforementioned system functions, and correspond to the NFC tags positioned underneath them, which in turn allow the execution of tasks when the MCD is in close proximity.

The TUI may also comprise of a tablet device's cover, wherein said cover NFC tags are positioned on its inner surface, and a tablet device. The utilization of the tablet device's display and its visual interface, allows for the easy and remote updating of the icons or images that correspond to different tasks and the complete reconfiguration of such tasks.

The MCD may be in the form of a smartphone device, comprising of a wireless interface that allows Near Field Communications to take place, operated by a custom user interface. This allows the user to operate the communication and control system without having to press any buttons or a touchscreen. This is possible by placing the MCD in close proximity to an NFC tag located on the TUI, represented visually by an image or icon of a person or a task, and the MCD extracts the tag information of the said NFC tag. If the task conditions are satisfied, the task is executed.

All tasks are ended by placing the MCD on the allocated charging spot on the TUI, which returns the MCD back to idle mode as well. The user is expected to place the MCD on the charging spot when the MCD is not being utilized.

Communication tasks include incoming and outgoing calls, as well as video messages and live video calling. Notification tasks include of emergency notification procedures that may be executed manually or automatically, or any type of informative notification. Entertainment tasks allow the playback of locally stored and/or online music and video playlists, as well as photo album displays on the MCD's display. House Control tasks include communication between the MCD and other devices. Such devices may comprise of household devices, lights or medical devices, and communicate with the MCD wirelessly. This type of communication is enabled only when the MCD is positioned at the home position on the TUI or when the MCD is placed in proximity to icons on the TUI that represent communication with specific household devices in order to execute house control tasks.

The communication and control system and its task execution data that is contained within the NFC tags on its TUI, may be managed through the communication with a central server. The central server communicates with the MCD to update tag information.

The communication and control system also monitors that the MCD is placed on the home position whenever it is not utilized. If the MCD remains away from the home position on the TUI for more than a predefined period of time, the MCD alerts the user or carer so that the MCD may be placed back onto the home position

### Brief description of drawings

FIG. 1: This figure shows the communication and control system, comprising of the Tangible User Interface (TUI), and the Mobile Communications Device (MCD).
FIG. 2: This figure shows a more detailed view of the TUI and its components.
FIG. 3: This figure shows a more detailed view of the MCD.
FIG. 4: This diagram indicates the communication and control system's procedure that takes place when the MCD is in close proximity to an image or icon.
FIG. 5: This diagram depicts the sequence of events that take place when a task is initiated for execution.
FIG. 6: This figure shows the resting position of the MCD on the TUI's home position, which is the charging spot for the MCD to be wirelessly recharged and while the MCD is located on the home position it is in idle mode.
FIG. 7: This figure shows the communication and control system's function categories and how they are related or represented on the TUI and the MCD.
FIG. 8: This diagram details the communication and control system's communication task of an incoming phone call.
FIG. 9 + 10: These diagrams detail the communication and control system' s outgoing communication tasks.
FIG. 11 + 12: These diagrams detail the communication and control system's communication tasks related to video messaging.
FIG. 13: This figure is a flowchart detailing the communication and control system's notification task, specifically the manual emergency procedure.
FIG. 14: This figure is a flowchart detailing the communication and control system's notification task, specifically the automatic emergency procedure.
FIG. 15 + 16: These figures contain flowcharts detailing the communication and control system's house control tasks and the various procedures that take place depending on which mode of the house control function is utilized.
FIG. 17: This figure shows the MCD and TUI in a house environment, indicating some of the different devices that the communication and control system can communicate with.
FIG. 18: This figure shows an alternative form of the TUI, which comprises of a tablet device and the tablet device's cover, wherein said cover NFC tags are arranged and visually represented by icons or images, with a wireless charging unit attached to it for the MCD to be recharged and placed into idle mode.
FIG. 19: This diagram details the interactions that occur between the central server and the MCD.
FIG. 20: This figure shows the procedure that takes place when the MCD has not been placed back on its home position.
FIG.21: This figure is a flowchart showing the communication and control system's process of executing a task in two steps.
FIG.22: This diagram details the communication and control system's manual entertainment tasks.
FIG.23: This diagram details the communication and control system's automatic entertainment tasks.
FIG.24: This diagram depicts the TUI in the form of a booklet.

### Description of embodiments

### System and principle

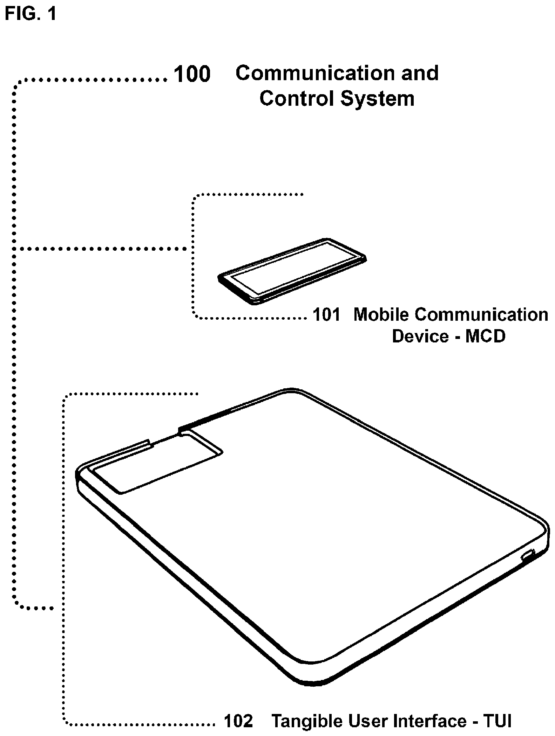

Embodiments of the present invention will now be described hereinafter with respect to the accompanying drawings. One embodiment of the communication and control system (100) is shown in FIG.1 where its main components are a mobile communications device (101), in short MCD (101), with a wireless interface for performing near field communications, in short NFC, and a tangible user interface (102), in short TUI (102), for performing wireless communication.

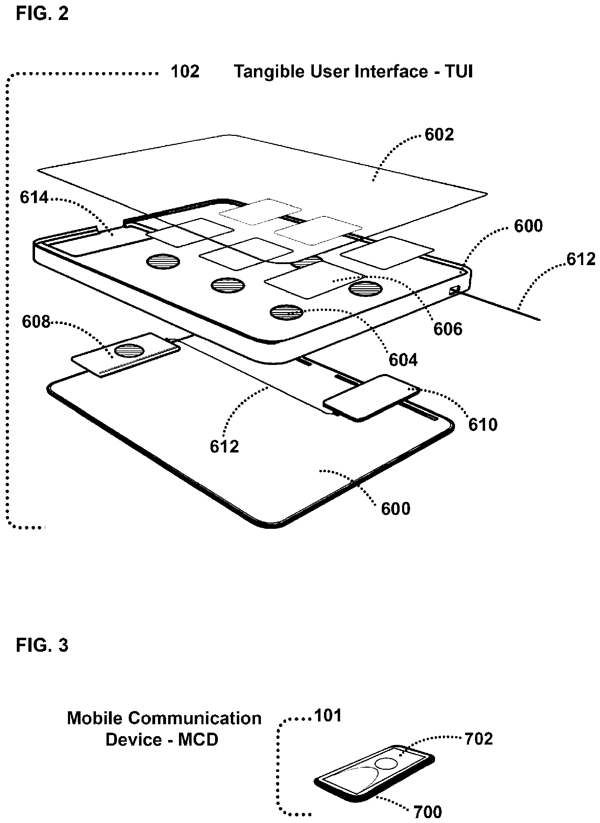

According to the invention the TUI (102) has a set of images or icons (606) related to persons or tasks, a set of NFC tags (604) corresponding to each of said images, and means for wirelessly charging (608) the MCD (101) by placing the MCD on a charging spot (614) on the TUI, as shown in FIG.2. The charging spot has a charging connection (612) and an NFC tag (604).

In the preferred embodiment the MCD (101) is a smartphone device (700) with a custom user interface application (702) installed, as shown in FIG.3

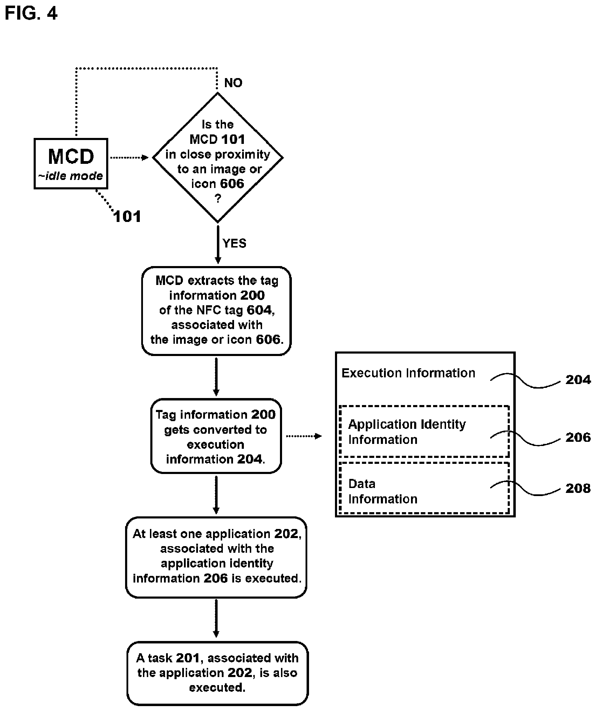

The communication and control system (100) operation, shown in FIG.4, is the following: the MCD is placed in close proximity to one of the images or icons (606) on the TUI, thus acquiring tag information (200) of a tag (604) associated with said image. Said tag information is related to at least one application (202) for execution by the MCD. The tag information is converted into execution information (204), which includes application identity information (206) and data information (208). Based on the extracted application identity information (206) at least one application (202) is executed, followed by the execution of an associated task (201).

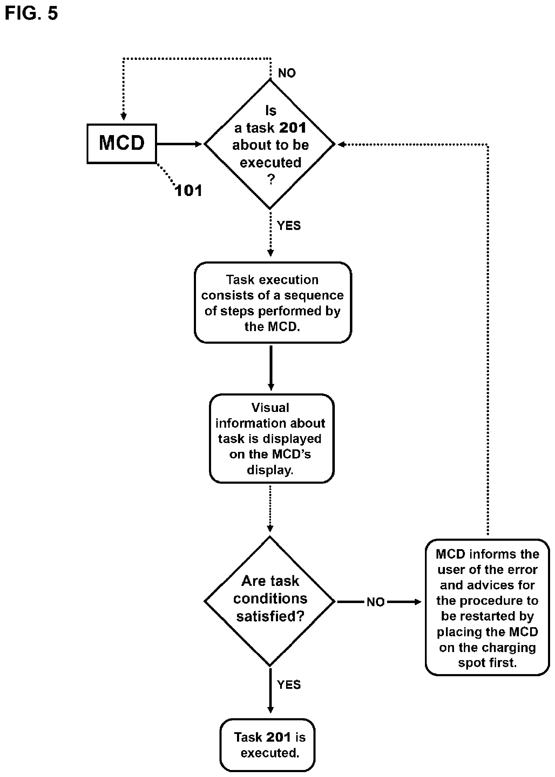

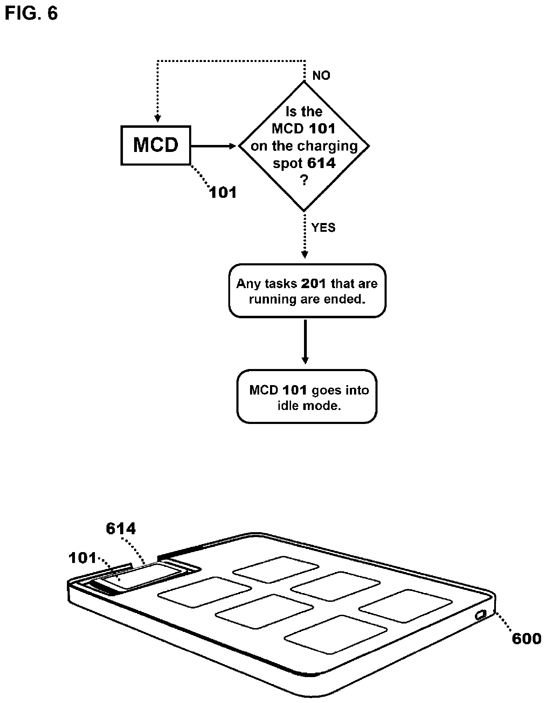

Said task (201) involves a sequence of steps performed by the MCD, as shown in FIG.5, wherein the execution of the task is ended by placing the MCD on the charging spot (614) of the TUI as shown in FIG.6.

In the preferred embodiment, the execution of a task (201) by the MCD follows a sequence of steps, as shown in FIG.5: displaying visual information about task to be performed, checking that conditions associated with the task are satisfied, and executing the task. Said task is ended by placing the MCD onto the charging spot (614) of the TUI.

In the preferred embodiment, the user (104) is expected to place the MCD on the charging spot (614) of the TUI when no tasks are to be performed, in which case the MCD goes into idle mode, as shown in FIG.6.

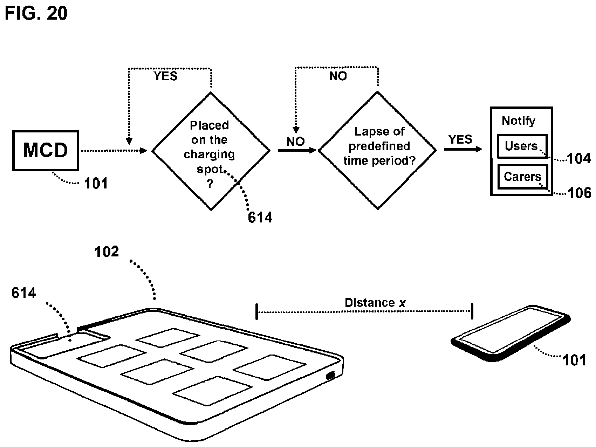

In the preferred embodiment, when the MCD remains away from the charging spot on the TUI for more than a predefined period of time, the MCD alerts the user or the carer (106) so that the user or the carer may place the MCD onto the charging spot as shown in FIG.20.

### Tasks configuration and categories

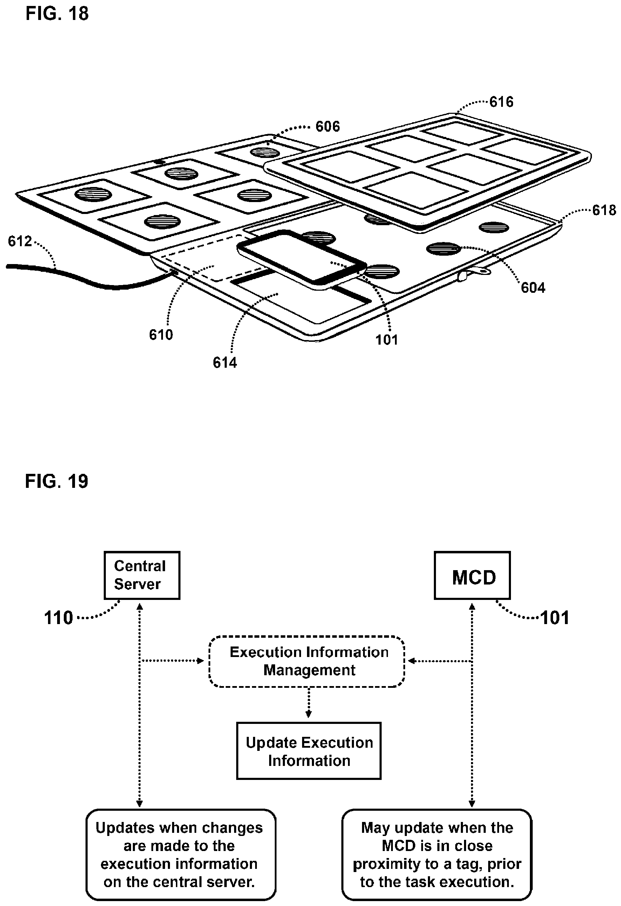

In the preferred embodiment, execution information (204) associated with tags (604) on the TUI and the corresponding images (606) of those tags is managed through communication with a central server (110), as shown in FIG.19. The server may communicate with the MCD to update tag information every time that tag information is changed on the server. In addition, an update may take place at regular intervals as the MCD is placed near a tag prior to the execution of a task. When an update occurs on the server and an image associated with the update is located on the TUI as a physical printed image, that image is expected to be changed manually by the user or preferably the carer(s), to correspond to the tag information change.

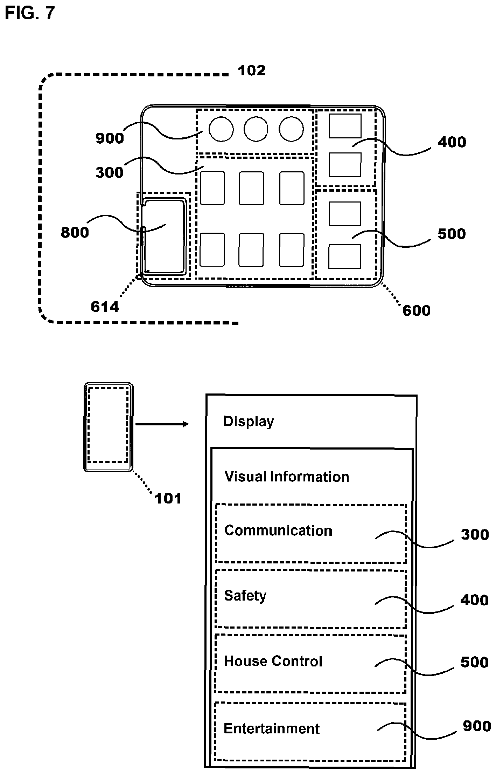

In one embodiment, tasks (201) are grouped into the following categories: communication (300), notification (400), entertainment (900), house control (500), and home position (800), as shown in FIG.7. The tasks and their categories are represented on the MCD using images or icons (606). Said home position is the charging spot (614), wherein placing the MCD onto the home position puts the MCD into idle mode.

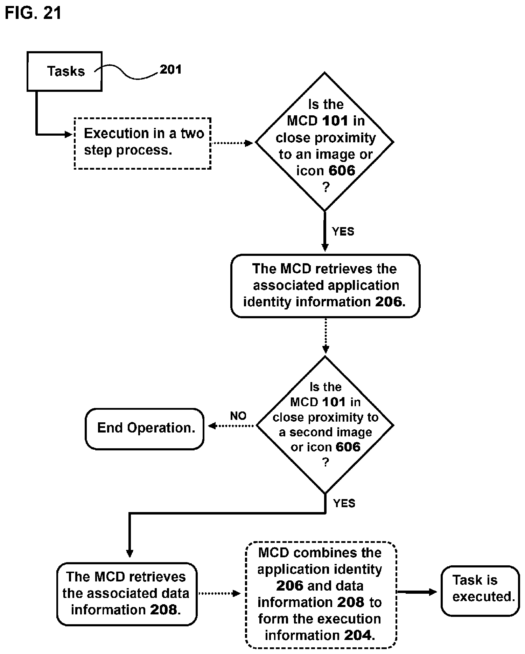

In the preferred embodiment, a task can be initiated based on task execution information (204) retrieved in two steps, as shown in FIG.21. In the first step, the user (104) places the MCD onto a first icon or image (606) on the TUI corresponding to a first tag (604), and the MCD retrieves the application identity information (206) of the said execution information (204). In the subsequent second step, the user places the MCD onto a second icon or image on the TUI corresponding to a second tag, and wherein the MCD retrieves the data information (208) of the said execution information (204). Based on the retrieved execution information (204) the corresponding application and task are executed using the corresponding data information.

### Task categories: notification

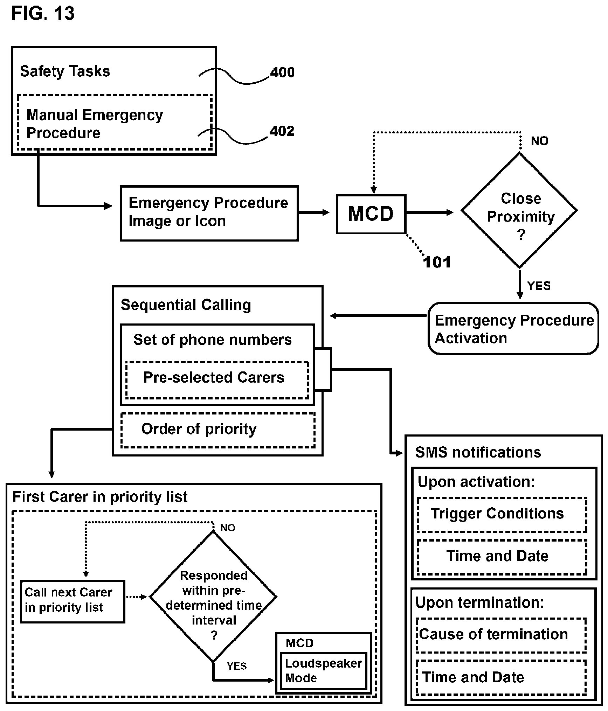

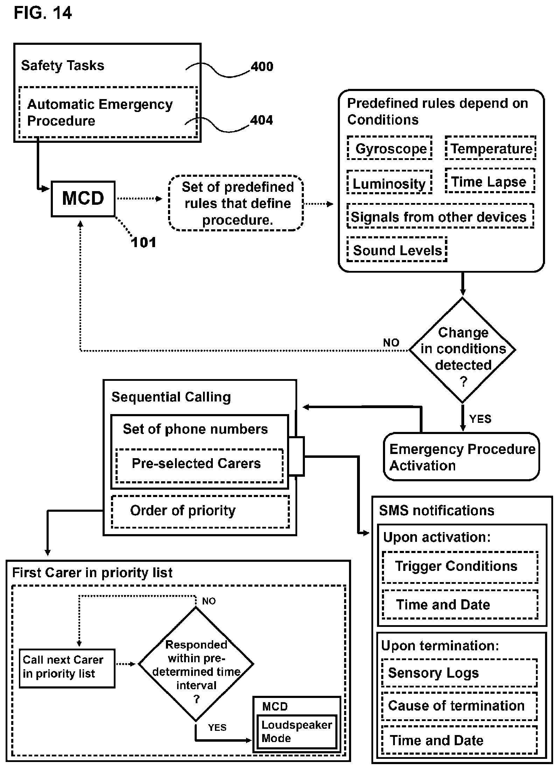

Tasks (201) related to notification (400), for example an emergency procedure may be executed manually (402), as shown in FIG.13, or automatically (404), as shown in FIG.14. Manual execution (402) is achieved when the user places the MCD in close proximity to the icon representing emergency, while automatic execution (404) is achieved when a set of conditions are detected by the MCD, while the MCD is at the home position on the TUI.

As shown in FIG.13 and FIG.14, after an emergency procedure is manually or automatically triggered, the MCD retrieves an ordered list of telephone numbers, each corresponding to a carer, and places a call to the first number. If the carer corresponding to the first number does not respond after a predetermined time interval, the next number in the ordered list is called until one carer answers the MCD call. Upon response by a carer the MCD is switched into loudspeaker mode.

During the emergency procedure, carers are notified by SMS about the emergency, wherein the SMS message provides information about the conditions that triggered the emergency procedure with a time and date. Upon termination of the emergency procedure, carers are also notified by SMS that the emergency procedure has been terminated with an SMS message that provides information on the cause of termination and the time.

The automatic execution (404) of the emergency procedure, shown in FIG.14, may be triggered by checking a combination of conditions in predefined rules while the MCD is on the TUI home position. These rules define task execution information (204) according to the combination of conditions. The combination of conditions depends on signals from the MCD, which may include time lapse, sensed luminosity level, sensed temperature levels, sound levels and signals from other devices. These devices may be in the form of medical devices that record the vital signs of the user or devices that monitor the home environment, like an air quality sensor.

Tasks (201) related to notification (400), like the emergency procedure may be terminated by placing the MCD onto the charging spot, as shown in FIG6. Said task termination procedure includes displaying a message or image on the MCD to the effect that emergency task will be terminated and sending SMS messages to the list of carers informing them of the termination of the emergency task. The SMS message may include information about the time of onset of the emergency task, the time of termination of emergency task, and data collected by sensors on the MCD. Once SMS messages are sent the task is terminated and the MCD returns to idle mode.

### Task categories: communication

In one embodiment, the communication and control system may be used to carry out tasks related to communication, for example accepting incoming calls, video messaging, or placing audio or video calls.

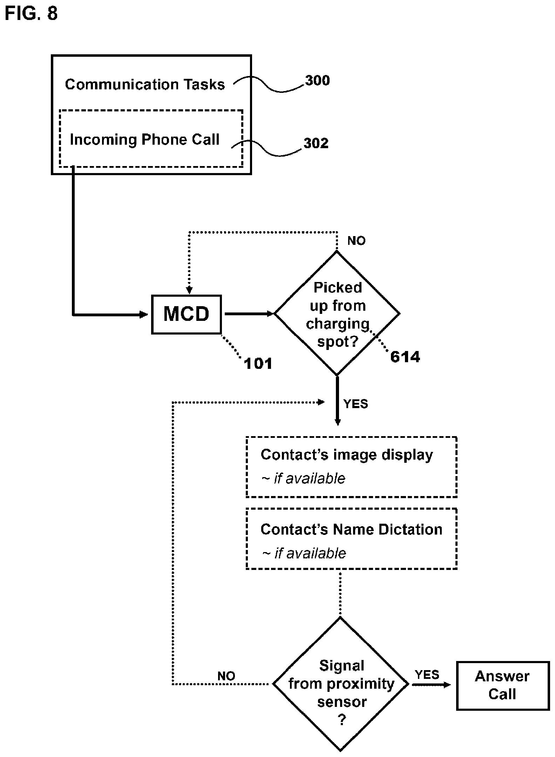

The user can accept incoming phone calls (302) by picking up the MCD from the home position on the TUI as shown in FIG.8. Picking the MCD up displays the image of the person calling on the MCD's display, if there is an image associated with the caller's number, dictates the name of the person calling, if a name is associated with the caller's number, and answers the call when a signal is received from the MCD's proximity sensor indicating that the MCD has been placed close to the user's ear. The call is terminated when the MCD is placed onto the home position of the TUI.

The user can initiate audio or video communication by placing the MCD near the image (606) representing the person to be contacted. Behind each icon or image there is an NFC tag (604), which the MCD uses to extract execution information related to communication tasks.

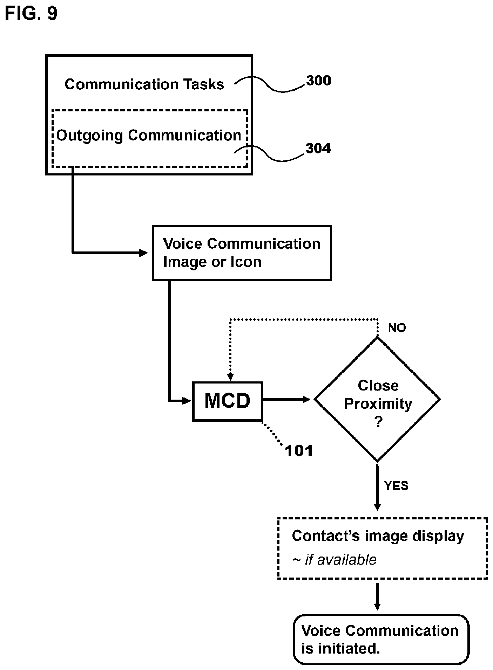

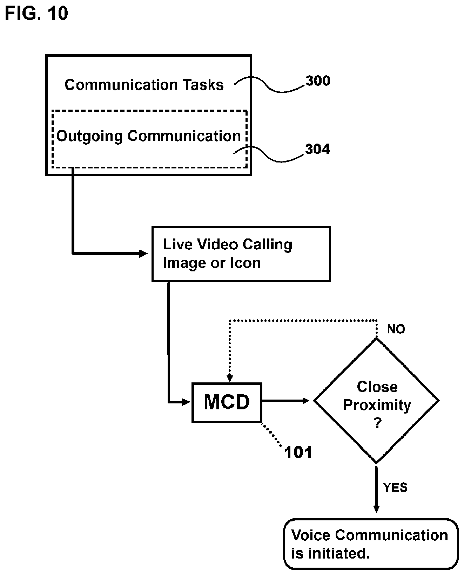

Icons or images with corresponding tags can initiate outgoing communication tasks (304) when the MCD is in close proximity to those, as shown in FIG.9 and FIG.10. For voice calling, the user places the MCD over an image or icon that corresponds to voice communication with a specific agent to initiate a telephone calling task to that agent. The said agent may be a physical person, an institution, a call centre or a virtual agent. In the case of the call centre or the virtual agent, these may serve the purpose of assisting the user to socially engage and converse when other options are unavailable to the user.

In a preferred embodiment the MCD displays the image of the agent that is being called, if there is an image associated with the caller's number. For live video calling, the user places the MCD over an image or icon that corresponds to live video communication with a specific person to initiate a live video calling task to that person.

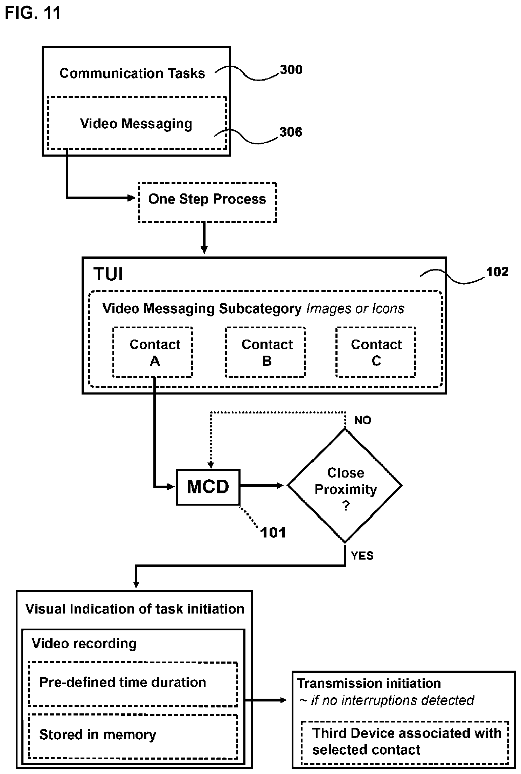

The user can initiate video messaging (306) in a one-step process or a two-step process. The one step process is shown in FIG. 11. This is achieved by placing the MCD over an image or icon that corresponds to a contact within the video messaging subcategory thus initiating a video messaging task towards the selected contact. The video messaging task involves the following steps: (a) provides indication to the user that video recording is about to start, (b) recording device on the MCD starts recording for a predefined period, (c) upon lapse of said period the recording is stored in memory and is ready to be transmitted to a third device (d) transmission is initiated after a predefined period, unless the task is interrupted by the user lifting the MCD away from the corresponding image or icon.

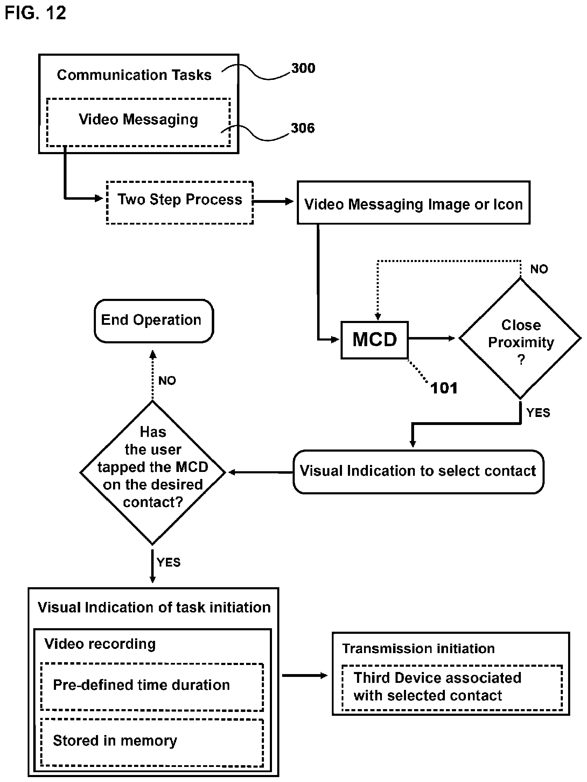

The two step process is shown in FIG.12. It is achieved by placing the MCD onto the video messaging icon on the TUI, which corresponds to a video messaging tag and respective task. Once the video messaging task is initiated, the user is prompted to select which contact they wish to send the video message to. Once the contact is selected by placing the MCD on the appropriate image on the TUI, the video recording device on the MCD starts recording for a predefined period. When the period lapses, the recording is stored in memory and is then transmitted to a third device, if no other interruptions are detected by the MCD

### Task categories: house control

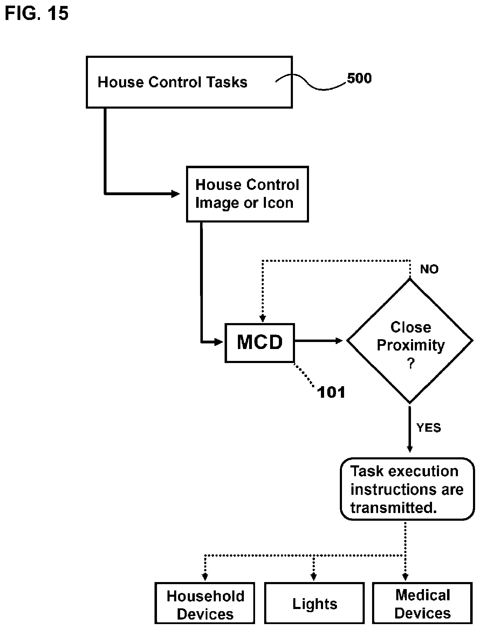

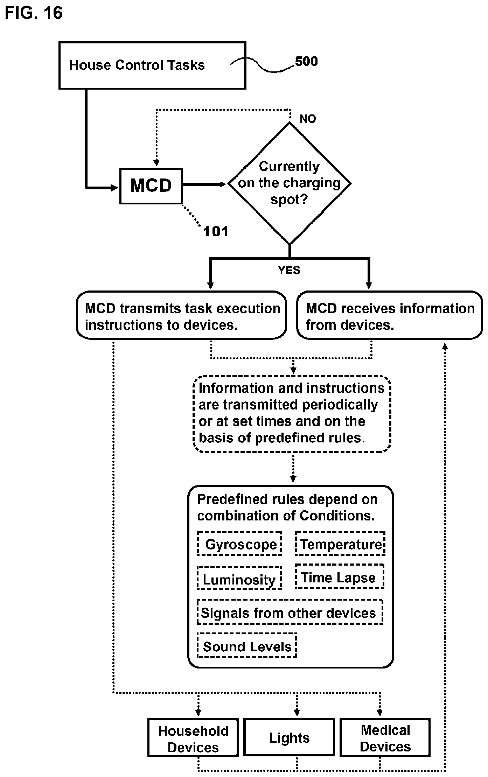

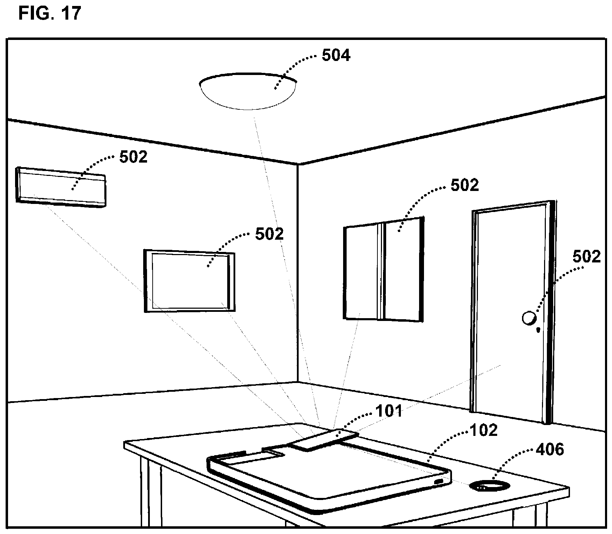

In one embodiment, the communication and control system may be used to carry out tasks related to house control (500), as shown in FIG.15 and FIG.16. The system (100) can be used to communicate wirelessly with other devices in its proximity while the MCD is placed on the home position on the TUI, for example household devices (502), lights (504), or medical devices (406) as shown in FIG17. The communication between other devices and the MCD is bidirectional, where the MCD may be receiving information from said devices or the MCD may be transmitting task execution instructions to said other devices. Such communication is enabled when the MCD is positioned at the home position on the TUI. In addition, communication may be initiated by the user by placing the MCD in proximity to images or icons in House control category on the TUI, as shown in FIG.15. Icons in the house control category may represent communication with specific household devices for executing corresponding house control tasks, as shown in FIG.17.

Said communication takes place only when the MCD is on the home position of the TUI and may be initiated periodically, at set times, or on the basis of predefined rules. These rules may include a combination of conditions such as time lapse, luminosity, temperature, sound level. Each rule defines execution information (204) according to the combination of said conditions.

### Task categories: entertainment

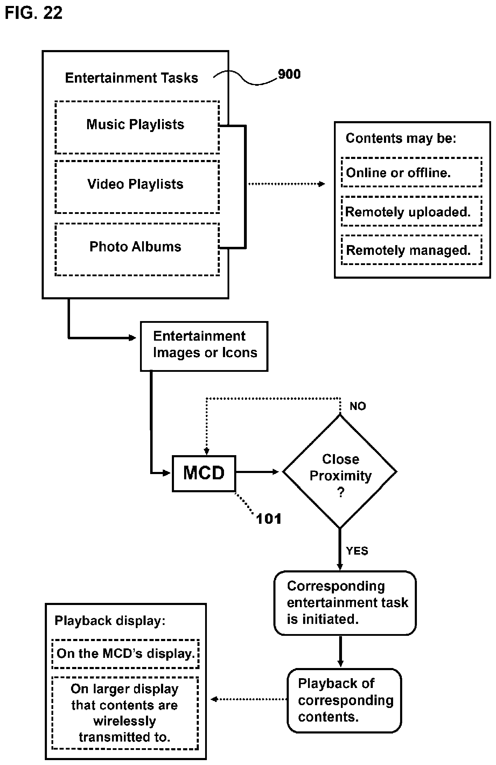

In one embodiment, the communication and control system may be used to carry out tasks related to entertainment (900), as shown in FIG.22. The user can playback locally stored and/or online music and video playlists on the MCD's display, or on another display that the MCD wirelessly transmits to, when the MCD is placed in close proximity to the icons that correspond to said playback. In one embodiment these playlists may be remotely customized by the carers as well.

The MCD may also download photos that have been remotely uploaded by contacts, to the MCD's internal memory. Photo albums that are locally stored or have been remotely uploaded, may be displayed when the MCD is placed in close proximity to the icon that corresponds to the photo playback.

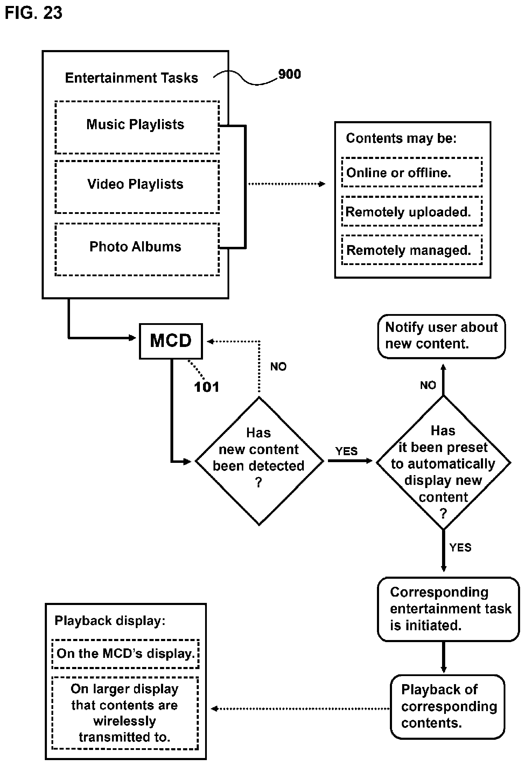

Entertainment tasks may be executed manually or automatically. Manual execution may be carried out by the user when the MCD is in close proximity to the icon representing an entertainment task, such as listening to music or watching videos from customized pre-created playlists. Automatic execution, which is shown in FIG.23, may be carried out when a set of conditions is detected by the MCD, when said MCD is located on the TUI's home position. The set of conditions may include the detection of a remote change in a pre-existing playlist or additions to a photo album, in which case the user is notified of the changes and, if such a preference has been pre-configured, the playlists or photo albums may be displayed automatically or the user may be asked how to proceed with the changes.

### Tangible user interface

In the preferred embodiment, the TUI (102) shown in FIG.2 includes a light portable board (600), with NFC tags (604) positioned on the surface of the base and arranged according to some grouping, and a top transparent layer (602) allowing the correct positioning of icons and images (606) corresponding to said NFC tags. The light portable board (600) encases a wireless charging unit (608) for charging the MCD (101), an internal battery (610) for providing power to said wireless charging unit and a charging interface (612) for charging said battery.

In another embodiment, a wireless interface on the TUI (102) is used for communications with a wireless interface on the MCD (101). Said communication may be used to report battery status information of the TUI 's internal battery (610) or charging interface (612) to the MCD.

In another embodiment, the TUI (102) shown in FIG.18 includes a cover (618) of a tablet device (616) with NFC tags positioned on the surface of the cover that is in contact with the back surface of the tablet, i.e. the surface opposite to the tablet display surface. The tags are arranged according to some grouping. The display of the tablet device (616) is arranged to always display icons or images corresponding to different tasks at the exact position as the position of the NFC tags on the tablet cover, allowing the correct execution of tasks corresponding to said NFC tags. Using of the display of the tablet as a visual interface for the indication of tasks enables easy and remote updating of icons or images corresponding to different tasks and complete reconfiguration of such tasks.

The cover (618) encases a wireless charging unit, located underneath the charging spot (614) for charging the MCD (101), a battery (610) for providing power to said wireless charging unit and a charging interface (612) for charging said battery.

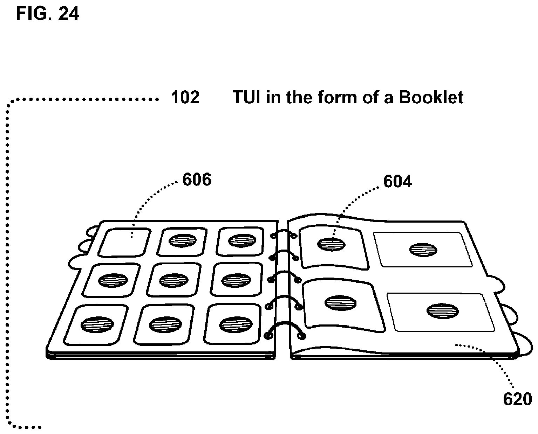

In another embodiment the Tangible User Interface (TUI) comprises of a booklet (620) of multiple pages, wherein each page comprises of a set of images related to persons or tasks (606) and a set of NFC tags (604) corresponding to each of said images, which can be seen in FIG.24. In the embodiment the booklet may be utilized when the storage of more contacts may be needed or when more services may be required by the user and there is no space on the TUI that comprises of a light portable board. Consequently, system functionality can be customized to each user 's lifestyle needs. The booklet may be in the form of a combination of durable, laminated, light pages that may be easily accessed and flipped by the user.

### Citation list

Prior art that should be taken into consideration during the review The use of Near Field Communication tags for device function control
US 20130203348 A1, (SAMSUNG), 02.02.2013
US 8929811 B2, (PANTECH CO), 24.08.2011
US 8988194 B2, (SAMSUNG), 22.09.2009
WO 2006111782 A1, (NOKIA CORP), 19.04.2005
WO 2007129253 A1, (PHILIPS ELECTRONIS), 04.05.2006
WO 2010018468 A1-US 8422944 B2, (SONY ERICSSON), 12.08.2008
WO 2011103684 A1, (RESEARCH IN MOTION), 26.02.2010
WO 2012159673 A1, (SONY ERICSSON), 25.05.2011
WO 2014091441 A1, (ISTITUTO SUPERIORE MARIO BOELLA SULLE), 13.12.2012
WO 2014202826 A1, (NOKIA CORP), 20.06.2013 The use of Images for device function control
CN 204463142 U, (WNG LEI), 08.01.2015 Tangible user interface & communication device for multiple external object control
US8768318B2, (VERIZON PATENT & LICENSING), 03.12.2008
US 2012139690 A1 (GUPTA YATHARTH ET AL), 07.06.2012

## Claims

1. A communication and control system (100) comprising: a Mobile Communications Device, MCD, (101) comprising a wireless interface adapted for performing near field communications and a Tangible User Interface, TUI, (102) adapted for performing wireless communication,
said TUI (102) comprising a set of images related to persons or tasks, a set of NFC tags (604) corresponding to each of said images, and means for wirelessly charging the MCD (101),
wherein, said system is adapted to operate such that when the MCD (101) is placed in close proximity to one of the images on the TUI (102), the MCD (101) acquires tag information of a tag associated with said one of the images, wherein said tag information is related to at least one application for execution by the MCD (101), whereupon the MCD (101) is adapted to convert the tag information into execution information, to extract application identity information and data information from the execution information, to execute at least one application associated with the application identity information, and to initiate the execution of a task intended with the execution of the at least one application, wherein said task involves a sequence of steps performed by the MCD (101),
wherein the means for wirelessly charging the MCD (101) comprises a charging spot on the TUI (102) adapted for placement of the MCD (101) and comprising a charging connection and an NFC tag (604), and in that the system is adapted such that execution of one or more of said tasks is ended by placing the MCD (101) on the charging spot.

2. A communication and control system (100) according to claim 1 wherein said tasks comprise notification tasks adapted for both manual and automatic execution, wherein manual execution of notification tasks is achieved when the MCD (101) is placed in close proximity to an icon representing that notification task, and automatic execution is achieved when a set of conditions are detected by the MCD (101) while said MCD (101) is at the charging spot of the TUI (102).

3. A communication and control system (100) according to claim 2 wherein for said notification tasks automatic execution is performed on the basis of predefined rules, said rules comprising a combination of conditions comprising one or more of time lapse, or changes in signals collected by the MCD (101), or signals that may be obtained from other devices, and wherein said rules define execution information according to the combination of said conditions.

4. A communication and control system (100) according to any preceding claim adapted for answering incoming calls on the picking up of the MCD (101) from the charging spot, wherein the picking up of the MCD (101) initiates a procedure comprising of displaying the image of the person calling if there is an image associated with the caller's number, dictating the name of the person calling if a name is associated with the caller's number, and answering the call when a signal is received from a proximity sensor of the MCD (101) indicating that the MCD (101) has been placed close to an ear of a user, and further adapted to terminate the call when the MCD (101) is placed onto the charging spot of the TUI (102).

5. A communication and control system (100) according to any preceding claim wherein the system is adapted for communication with other devices in proximity to the system, said other devices comprising one or more of household devices, entertainment devices, home automation devices, personal care devices and medical devices, wherein the system is adapted for wireless communication between said devices and the MCD (101), said wireless communication comprising the MCD (101) receiving information from said devices or the MCD (101) transmitting task execution instructions to said other devices, and wherein such communication is enabled when the MCD (101) is positioned at the charging spot on the TUI (102) or when the MCD (101) is placed in proximity to icons on the TUI (102) representing communication with specific devices for executing respective control tasks.

6. A communication and control system (100) according to any preceding claim wherein the system is adapted to manage execution information associated with tags on the TUI (102) and the corresponding images of those tags through communication with a central server, wherein the MCD (101) is adapted to communicate with the central server to obtain an update to execution information, wherein said update is adapted to take place following a change in execution information on the central server, or at regular intervals on placing of the MCD (101) near a tag prior to the execution of a task.

7. A communication and control system (100) according to any preceding claim wherein the Tangible User Interface, TUI, (102) comprises a light portable base, NFC tags (604) positioned on the surface of the base, a wireless charging unit for charging a Mobile Communications Device, MCD (101), a battery for providing power to said wireless charging unit, a charging interface for charging said battery, and a top layer, said top layer allowing the correct positioning of icons and images corresponding to said NFC tags (604).

8. A communication and control system (100) according to any of claims 1 to 6 wherein the Tangible User Interface, TUI,(102) comprises a cover of a tablet device, and wherein the communication and control system further comprises a suitably programmed tablet device, wherein said cover comprises NFC tags (604) positioned on a surface of the cover and configured to contact a back surface of the tablet device being the surface opposite to a tablet display surface, a wireless charging unit for charging a Mobile Communications Device, MCD (101), a battery for providing power to said wireless charging unit, a charging interface for charging said battery, and wherein the display of the tablet device is arranged to always display icons or images corresponding to different tasks at a position corresponding to a position of the NFC tags (604) for those tasks on the tablet cover, thereby allowing the correct execution of tasks corresponding to said NFC tags (604), thereby using the display of the tablet as a visual interface for the indication of tasks.

9. A communication and control system (100) according to any of claims 1 to 6 wherein the Tangible User Interface, TUI, (102) comprises of a booklet of multiple pages, wherein each page comprises of a set of images related to persons or tasks and a set of NFC tags (604) corresponding to each of said images.

10. A method of executing tasks using a communication and control system (100) as claimed in any of claims 1 to 8,
the method comprising placing the MCD (101) in close proximity to one of the images, acquiring tag information of a tag associated with one of the images on the TUI (102), wherein said tag information is related to at least one application for execution by the MCD (101), converting the tag information into execution information, extracting application identity information and data information from the execution information, executing at least one application associated with the application identity information, and initiating the execution of a task intended with the execution of the at least one application, wherein said task involves a sequence of steps performed by the MCD (101) and ending the execution of one or more of said tasks by placing the MCD (101) on the charging spot of the TUI (102).

11. The method according to claim 10 wherein said tasks comprise notification tasks, the method further comprising executing a task either manually or automatically, manual execution comprising placing the MCD (101) in close proximity to the icon representing a notification, and automatic execution comprises detection of a set of conditions by the MCD (101) to trigger automatic execution while said MCD (101) is at the charging spot on the TUI (102).

12. The method according to claim 11 wherein said notification task is an emergency task and wherein manual or automatic execution of the emergency task comprises calling a sequence of present telephone numbers, each telephone number corresponding to a carer, said sequence having an order of priority, such that if a current number in the sequence does not respond after a predetermined time interval, a next number is called until one number responds, and wherein upon response by one carer the MCD (101) is switched into loudspeaker mode.

13. The method according to claim 12 wherein as part of an emergency procedure established by the emergency task carers are notified by SMS about the emergency, wherein the SMS message provides information about the conditions that triggered the emergency procedure with a time and date, and wherein upon termination of the emergency procedure carers are also notified by SMS that the emergency procedure has been terminated with an SMS message that provides information on the cause of termination and the time.

14. The method according to claim 13, wherein the SMS messages comprise information about the time of onset of the emergency task, the time of termination of the emergency task, and data collected by the MCD (101), comprising one or more of luminosity, change in MCD (101) gyroscope data, temperature, sound level, data collected from medical devices that record the vital signs of the user or an air quality sensor.

15. The method according to claim 11 further comprising, in performing an automatic execution, performing the automatic execution on the basis of predefined rules, said rules comprising a combination of conditions comprising one or more of time lapse, changes in signals collected by the MCD (101), or obtaining signals from other devices, and wherein said rules define execution information according to the combination of said conditions.

16. The method according to claim 10 comprising answering incoming calls on picking up the MCD (101) from the charging spot, by displaying an image of a caller if there is an image associated with the caller's number, dictating a name of the caller if a name is associated with the caller's number, and answering the call when a signal is received from a proximity sensor of the MCD (101) to indicate that the MCD (101) is in proximity to an ear of a user, and terminating the call when the MCD (101) is placed onto the charging spot of the TUI (102).

17. The method according to claim 10, further comprising initiating a task by retrieving task execution information in two steps, wherein in the first step the MCD (101) is placed onto a first icon or image on the TUI (102) corresponding to a first tag, whereupon the MCD (101) retrieves application identity information of the said execution information using the first tag, and wherein in the second step the MCD (101) is placed onto a second icon or image on the TUI (102) corresponding to a second tag, and wherein the MCD (101) retrieves data information of the said execution information using the second tag.

18. The method according to claim 10, the method comprising initiating audio or video communication on placement of the MCD (101) near images or icons representing an agent to be contacted, wherein behind said icons or images are NFC tags (604)containing task execution information, and wherein said icons or images comprise icons or images for live telephone calling, for live video calling, or for recorded video messaging for each of the people that could be contacted, and wherein placing the MCD (101) over an image or icon that corresponds to voice communication with a specific agent initiates a telephone calling task to that person, placing the MCD (101) over an image or icon that corresponds to live video communication initiates a live video calling task to that person, and placing the MCD (101) over an image or icon that corresponds to video messaging initiates a video messaging task towards a specific person, said video messaging task to a specific person comprises the steps of providing indication that video recording is about to start, recording device on the MCD (101) starts recording for a pre-defined period, upon lapse of said period the recording is stored in memory and is ready to be transmitted to a third device, said transmission is initiated after a predetermined time period unless the task is interrupted by lifting of the MCD (101) away from the corresponding image or icon.

19. The method according to claim 10, the method further comprising the MCD (101) communicating wirelessly with other devices in proximity to the system, said other devices comprising one or more of household devices, entertainment devices, home automation devices, personal care devices, and medical devices, said communication comprising the MCD (101) receiving information from said other devices or the MCD (101) transmitting task execution instructions to said other devices, and wherein such communication is enabled when the MCD (101) is positioned at the charging spot on the TUI (102) or when the MCD (101) is placed in proximity to icons on the TUI (102) representing communication with specific devices for executing respective control tasks.

20. The method according to claim 19, further comprising initiating said communication either periodically, at set times, or on the basis of pre-defined rules, said rules comprising a combination of conditions comprising one or more of time lapse, luminosity, temperature, sound level, and wherein said rules define execution information according to the combination of said conditions, and wherein said communication takes place only when the MCD (101) is on the charging spot of the TUI (102).

21. The method according to claim 10, further comprising wherein when the Mobile Communications Device, MCD (101), remains away from the charging spot on the TUI (102) for more than a predefined period of time, the MCD (101) alerting a user or a carer to replace the MCD (101) onto the charging spot.

## Patentansprüche

1. Kommunikations- und Steuersystem (100), umfassend: eine Mobile Kommunikationsvorrichtung, MCD, (101), umfassend eine drahtlose Schnittstelle umfasst, die zum Durchführen der Nahfeldkommunikation angepasst ist, und einer anfassbaren Benutzerschnittstelle, TUI, (102), die zum Durchführen einer drahtlosen Kommunikation angepasst ist,
die TUI (102) umfassend einen Satz von Bildern, die sich auf Personen oder Aufgaben beziehen, einen Satz von NFC-Tags (604), die jedem der Bilder entsprechen, und Mittel zum drahtlosen Laden der MCD (101),
wobei das System angepasst ist, um derart zu arbeiten, dass, wenn die MCD (101) in unmittelbarer Nähe eines der Bilder auf der TUI (102) platziert ist, die MCD (101) Tag-Informationen eines Tags erfasst, der dem einen der Bilder zugeordnet ist, wobei sich die Tag-Informationen auf mindestens eine Anwendung für eine Ausführung durch die MCD (101) beziehen, woraufhin die MCD (101) angepasst ist, um die Tag-Informationen in Ausführungsinformationen umzuwandeln, um Anwendungsidentitätsinformationen und Dateninformationen aus den Ausführungsinformationen zu extrahieren, um mindestens eine Anwendung auszuführen, die den Anwendungsidentitätsinformationen zugeordnet ist, und um die Ausführung einer vorgesehenen Aufgabe mit der Ausführung der mindestens einen Anwendung zu initiieren, wobei die Aufgabe eine Sequenz von Schritten involviert, die durch die MCD (101) durchgeführt werden,
wobei das Mittel zum drahtlosen Laden der MCD (101) einen Ladeort auf der TUI (102) umfasst, der für eine Platzierung der MCD (101) angepasst ist und umfassend eine Ladeverbindung und ein NFC-Tag (604), und wobei das System derart angepasst ist, dass die Ausführung einer oder mehrerer der Aufgaben durch Platzieren der MCD (101) auf dem Ladeort beendet wird.

2. Kommunikations- und Steuersystem (100) nach Anspruch 1, wobei die Aufgaben Benachrichtigungsaufgaben umfassen, die sowohl für eine manuelle als auch für eine automatische Ausführung angepasst sind, wobei die manuelle Ausführung von Benachrichtigungsaufgaben erreicht wird, wenn die MCD (101) in unmittelbarer Nähe zu einem Symbol platziert ist, das diese Benachrichtigungsaufgabe darstellt, und die automatische Ausführung erreicht wird, wenn ein Satz von Bedingungen durch die MCD (101) erkannt wird, während sich die MCD (101) an dem Ladeort der TUI (102) befindet.

3. Kommunikations- und Steuersystem (100) nach Anspruch 2, wobei für die Benachrichtigungsaufgaben die automatische Ausführung auf der Basis von vordefinierten Regeln durchgeführt wird, die Regeln umfassend eine Kombination von Bedingungen, umfassend einen oder mehrere von Zeitabläufe oder Änderungen in Signalen, die durch die MCD (101) gesammelt werden, oder Signalen, die von anderen Vorrichtungen erhalten werden können, und wobei die Regeln Ausführungsinformationen gemäß der Kombination der Bedingungen definieren.

4. Kommunikations- und Steuersystem (100) nach einem der vorstehenden Ansprüche, das für ein Annehmen von eingehenden Anrufen auf dem Abheben der MCD (101) von dem Ladeort angepasst ist, wobei das Abheben der MCD (101) ein Vorgehen initiiert, umfassend Anzeigen des Bilds der Person, die anruft, falls es ein Bild gibt, das der Nummer des Anrufers zugeordnet ist, Diktieren des Namens der Person, die anruft, falls ein Name der Nummer des Anrufers zugeordnet ist, und Annehmen des Anrufs, wenn ein Signal von einem Näherungssensor der MCD (101) empfangen wird, der angibt, dass die MCD (101) nahe an einem Ohr eines Benutzers platziert wurde, und ferner angepasst ist, um den Anruf zu terminieren, wenn die MCD (101) auf den Ladeort der TUI (102) platziert wird.

5. Kommunikations- und Steuersystem (100) nach einem der vorstehenden Ansprüche, wobei das System für die Kommunikation mit anderen Vorrichtungen in einer Nähe des Systems angepasst ist, die anderen Vorrichtungen umfassend ein oder mehrere von Haushaltsvorrichtungen, Unterhaltungsvorrichtungen, Gebäudeautomationsvorrichtungen, Körperpflegevorrichtungen und medizinischen Vorrichtungen, wobei das System für die drahtlose Kommunikation zwischen den Vorrichtungen und der MCD (101) angepasst ist, die drahtlose Kommunikation umfassend die MCD (101), die Informationen von den Vorrichtungen oder der MCD (101) empfängt, die Aufgabenausführungsanweisungen an die anderen Vorrichtungen überträgt/übertragen, und wobei eine derartige Kommunikation aktiviert ist, wenn die MCD (101) an dem Ladeplatz auf der TUI (102) positioniert ist, oder wenn die MCD (101) in der Nähe von Symbolen auf der TUI (102) platziert ist, die die Kommunikation mit spezifischen Vorrichtungen zum Ausführen jeweiliger Steueraufgaben darstellt.

6. Kommunikations- und Steuersystem (100) nach einem der vorstehenden Ansprüche, wobei das System angepasst ist, um die Ausführungsinformationen, die Tags auf der TUI (102) zugeordnet sind, und die entsprechenden Bilder dieser Tags über Kommunikation mit einem zentralen Server zu verwalten, wobei die MCD (101) angepasst ist, um mit dem zentralen Server zu kommunizieren, um eine Aktualisierung der Ausführungsinformationen zu erhalten, wobei die Aktualisierung angepasst ist, um nach einer Änderung der Ausführungsinformationen auf dem zentralen Server oder in regelmäßigen Intervallen bei dem Platzieren der MCD (101) nahe eines Tags vor der Ausführung einer Aufgabe zu erfolgen.

7. Kommunikations- und Steuersystem (100) nach einem der vorstehenden Ansprüche, wobei die anfassbare Benutzerschnittstelle, TUI, (102) eine helltragbare Basis, NFC-Tags (604), die auf der Oberfläche der Basis positioniert sind, eine drahtlose Ladeeinheit zum Laden einer mobilen Kommunikationsvorrichtung, MCD, (101), eine Batterie zum Bereitstellen von Strom an die drahtlose Ladeeinheit, eine Ladeschnittstelle zum Laden der Batterie und eine obere Schicht umfasst, wobei die obere Schicht die korrekte Positionierung von Symbolen und Bildern ermöglicht, die den NFC-Tags (604) entsprechen.

8. Kommunikations- und Steuerungssystem (100) nach einem der Ansprüche 1 bis 6, wobei die anfassbare Benutzerschnittstelle, TUI, (102) eine Abdeckung einer Tablet-Vorrichtung umfasst, und wobei das Kommunikationsund Steuersystem ferner eine geeignet programmierte Tablet-Vorrichtung umfasst, wobei die Abdeckung NFC-Tags (604), die auf einer Oberfläche der Abdeckung positioniert und konfiguriert sind, um eine Rückenoberfläche der Tablet-Vorrichtung zu kontaktieren, die die Oberfläche gegenüber einer Tablet-Anzeigeoberfläche ist, eine drahtlose Ladeeinheit zum Laden einer mobilen Kommunikationsvorrichtung, MCD, (101), eine Batterie zum Bereitstellen von Leistung an die drahtlose Ladeeinheit, eine Ladeschnittstelle zum Laden der Batterie umfasst, wobei die Anzeige der Tablet-Vorrichtung angeordnet ist, um immer Symbole oder Bilder anzuzeigen, die verschiedenen Aufgaben an einer Position entsprechen, die einer Position der NFC-Tags (604) für diese Aufgaben auf der Tablet-Abdeckung entspricht, wobei dadurch die korrekte Ausführung von Aufgaben ermöglicht wird, die den NFC-Tags (604) entsprechen, wobei dadurch die Anzeige der Tablet-Vorrichtung als eine visuelle Schnittstelle für die Angabe von Aufgaben verwendet wird.

9. Kommunikations- und Steuersystem (100) nach einem der Ansprüche 1 bis 6, wobei die anfassbare Benutzerschnittstelle, TUI, (102) eine Broschüre mit mehreren Seiten umfasst, wobei jede Seite einen Satz von Bildern umfasst, die sich auf Personen oder Aufgaben beziehen, und einen Satz von NFC-Tags (604), die jedem der Bilder entsprechen.

10. Verfahren zum Ausführen von Aufgaben unter Verwendung eines Kommunikations- und Steuersystems (100) nach einem der Ansprüche 1 bis 8,
das Verfahren umfassend das Platzieren der MCD (101) in unmittelbarer Nähe eines der Bilder, das Erfassen von Tag-Informationen eines Tags, der einem der Bilder auf der TUI (102) zugeordnet ist, wobei die Tag-Informationen sich auf mindestens eine Anwendung für die Ausführung durch die MCD (101) beziehen, Umwandeln der Tag-Informationen in Ausführungsinformationen, Extrahieren von Anwendungsidentitätsinformationen und Dateninformationen aus den Ausführungsinformationen, Ausführen mindestens einer Anwendung, die den Anwendungsidentitätsinformationen zugeordnet ist, und Initiieren der Ausführung einer vorgesehenen Aufgabe mit der Ausführung der mindestens einen Anwendung, wobei die Aufgabe eine Sequenz von Schritten involviert, die durch die MCD (101) durchgeführt wird, und Beenden der Ausführung der einen oder der mehreren Aufgaben durch Platzieren der MCD (101) auf den Ladeort der TUI (102).

11. Verfahren nach Anspruch 10, wobei die Aufgaben Benachrichtigungsaufgaben umfassen, das Verfahren ferner umfassend das Ausführen einer Aufgabe entweder manuell oder automatisch, die manuelle Ausführung umfassend das Platzieren der MCD (101) in unmittelbarer Nähe des Symbols, das eine Benachrichtigung darstellt, und die automatische Ausführung das Erkennen eines Satzes von Bedingungen durch die MCD (101) umfasst, um eine automatische Ausführung auszulösen, während sich die MCD (101) an dem Ladeort auf der TUI (102) befindet.

12. Verfahren nach Anspruch 11, wobei die Benachrichtigungsaufgabe eine Notfallaufgabe ist und wobei die manuelle oder automatische Ausführung der Notfallaufgabe das Anrufen einer Sequenz von gegenwärtigen Telefonnummern umfasst, wobei jede Telefonnummer einem Betreuer entspricht, wobei die Sequenz eine Prioritätssequenz derart aufweist, dass, falls eine aktuelle Nummer in der Sequenz nach einem zuvor bestimmten Zeitintervall nicht antwortet, eine nächste Nummer angerufen wird, bis eine Nummer antwortet, und wobei bei einer Antwort durch einen Betreuer die MCD (101) in den Lautsprechermodus geschaltet wird.

13. Verfahren nach Anspruch 12, wobei als Teil eines Notfallvorgehens, das durch die Notfallaufgabe hergestellt wird, Betreuer über eine SMS-Nachricht über den Notfall informiert werden, wobei die SMS-Nachricht Informationen über die Bedingungen mit einer Zeit und einem Datum bereitstellt, die das Notfallvorgehen auslösen, und wobei bei einer Terminierung des Notfallvorgehens, Betreuer ebenso durch eine SMS benachrichtigt werden, dass das Notfallvorgehen mit einer SMS-Nachricht terminiert wurde, die Informationen über die Ursache der Terminierung und die Zeit bereitstellt.

14. Verfahren nach Anspruch 13, wobei die SMS-Nachrichten Informationen über die Zeit des Beginns der Notfallaufgabe, die Zeit der Terminierung der Notfallaufgabe und Daten umfassen, die durch die MCD (101) gesammelt werden, umfassend eines oder mehrere von Leuchtkraft, Änderung der MCD(101)-Gyroskopdaten, Temperatur, Schallpegel, Daten, die von medizinischen Vorrichtungen gesammelt werden, die die Vitalsignale des Benutzers oder eines Luftqualitätssensors aufzeichnen.

15. Verfahren nach Anspruch 11, ferner umfassend, bei dem Durchführen einer automatischen Ausführung, Durchführen der automatischen Ausführung auf der Basis von vordefinierten Regeln, die Regeln umfassend eine Kombination von Bedingungen, umfassend eines oder mehrere von Zeitablauf, Änderungen der Signale, die durch die MCD (101) gesammelt werden, oder Erhalten von Signalen von anderen Vorrichtungen, und wobei die Regeln Ausführungsinformationen gemäß der Kombination der Bedingungen definieren.

16. Verfahren nach Anspruch 10, umfassend das Abheben eingehender Anrufe bei dem Annehmen der MCD (101) von dem Ladeort durch Anzeigen eines Bilds eines Anrufers, falls es ein Bild gibt, das der Nummer des Anrufers zugeordnet ist, Diktieren eines Namen des Anrufers, falls ein Name der Nummer des Anrufers zugeordnet ist, und Annehmen des Anrufs, wenn ein Signal von einem Näherungssensor der MCD (101) empfangen wird, um anzugeben, dass sich die MCD (101) in der Nähe eines Ohrs eines Benutzers befindet, und Terminieren des Anrufs, wenn die MCD (101) auf den Ladeort der TUI (102) platziert wird.

17. Verfahren nach Anspruch 10, ferner umfassend das Initiieren einer Aufgabe durch Abrufen von Aufgabenausführungsinformationen in zwei Schritten, wobei in dem ersten Schritt die MCD (101) auf ein erstes Symbol oder Bild auf der TUI (102) platziert wird, die einem ersten Tag entspricht, woraufhin die MCD (101) Anwendungsidentitätsinformationen der Ausführungsinformationen unter Verwendung des ersten Tags abruft, und wobei in dem zweiten Schritt die MCD (101) auf ein zweites Symbol oder Bild auf der TUI (102) platziert wird, die einem zweiten Tag entspricht, und wobei die MCD (101) Dateninformationen der Ausführungsinformationen unter Verwendung des zweiten Tags abruft.

18. Verfahren nach Anspruch 10, das Verfahren umfassend das Initiieren einer Audio- oder Videokommunikation auf der Platzierung der MCD (101) nahe von Bildern oder Symbolen, die einen Agenten darstellen, der kontaktiert werden soll, wobei hinter den Symbolen oder Bildern NFC-Tags (604) sind, die Aufgabenausführungsinformationen enthalten, und wobei die Symbole oder Bilder Symbole oder Bilder für Live-Telefonanrufe, für Live-Videoanrufe oder für aufgezeichnete Videonachrichten für jede der Personen umfassen, die kontaktiert werden könnte, und wobei das Platzieren der MCD (101) über ein Bild oder Symbol, das der Sprachkommunikation mit einem spezifischen Agenten entspricht, eine Telefonanrufaufgabe zu dieser Person initiiert, das Platzieren der MCD (101) über ein Bild oder Symbol, das der Live-Videokommunikation entspricht, eine Live-Videoanrufaufgabe zu dieser Person initiiert, und das Platzieren der MCD (101) über ein Bild oder ein Symbol, das der Videonachricht entspricht, eine Videonachrichtenaufgabe zu einer spezifischen Person hin initiiert, wobei die Videonachrichtenaufgabe zu einer spezifischen Person die Schritte eines Bereitstellens der Angabe umfasst, das eine Videoaufnahme dabei ist, anzufangen, eine Aufnahmevorrichtung auf der MCD (101) anfängt, für einen vordefinierten Zeitraum aufzunehmen, bei einem Ablauf des Zeitraums die Aufzeichnung in einem Speicher gespeichert ist und bereit ist, um zu einer dritten Vorrichtung übertragen zu werden, wobei die Übertragung nach einem zuvor bestimmten Zeitraum initiiert wird, außer die Aufgabe durch Heben der MCD (101) weg von dem entsprechenden Bild oder Symbol unterbrochen wird.

19. Verfahren nach Anspruch 10, das Verfahren ferner umfassend, dass die MCD (101) mit anderen Vorrichtungen in der Nähe des Systems drahtlos kommuniziert, die anderen Vorrichtungen umfassend eines oder mehrere von Haushaltsvorrichtungen, Unterhaltungsvorrichtungen, Gebäudeautomationsvorrichtungen, Körperpflegevorrichtungen und medizinischen Vorrichtungen, die Kommunikation umfassend, dass das MCD (101) Informationen von den anderen Vorrichtungen empfängt oder dass das MCD (101) Aufgabenausführungsanweisungen an die anderen Vorrichtungen überträgt, und wobei eine derartige Kommunikation aktiviert ist, wenn die MCD (101) an dem Ladeplatz auf der TUI (102) positioniert ist, oder wenn die MCD (101) in der Nähe von Symbolen auf der TUI (102) platziert ist, die die Kommunikation mit spezifischen Vorrichtungen zum Ausführen jeweiliger Steueraufgaben darstellt.

20. Verfahren nach Anspruch 19, ferner umfassend das Initiieren der Kommunikation entweder periodisch, zu festgelegten Zeiten oder auf der Basis von vordefinierten Regeln, die Regeln umfassend eine Kombination von Bedingungen, umfassend eines oder mehrere von Zeitablauf, Leuchtkraft, Temperatur, Schallpegel, und wobei die Regeln Ausführungsinformationen gemäß der Kombination der Bedingungen definieren, und wobei die Kommunikation nur erfolgt, wenn sich die MCD (101) auf dem Ladeort der TUI (102) befindet.

21. Verfahren nach Anspruch 10, ferner umfassend, wobei, wenn die mobile Kommunikationsvorrichtung, MCD, (101), länger als ein vordefinierter Zeitraum von dem Ladeort auf der TUI (102) entfernt bleibt, die MCD (101) einen Benutzer oder einen Betreuer alarmiert, um die MCD (101) wieder auf den Ladeort zu platzieren.

## Revendications

1. Système de communication et de commande (100) comprenant : un dispositif de communication mobile, MCD, (101) comprenant une interface sans fil conçue pour réaliser des communications en champ proche et une interface utilisateur tangible, TUI, (102) conçue pour réaliser une communication sans fil,
ladite TUI (102) comprenant un ensemble d'images se rapportant à des personnes ou des tâches, un ensemble d'étiquettes NFC (604) correspondant à chacune desdites images et un moyen de chargement sans fil du MCD (101),
dans lequel, ledit système est conçu pour fonctionner de telle sorte que lorsque le MCD (101) est placé à proximité immédiate d'une des images sur la TUI (102), le MCD (101) acquiert des informations d'étiquette d'une étiquette associée à ladite image des images, dans lequel lesdites informations d'étiquette se rapportent à au moins une application pour exécution par le MCD (101), lorsque le MCD (101) est conçu pour convertir les informations d'étiquette en informations d'exécution, pour extraire des informations d'identité d'application et des informations de données à partir des informations d'exécution, pour exécuter au moins une application associée aux informations d'identité d'application, et pour lancer l'exécution d'une tâche destinée à l'exécution de l'au moins une application, dans lequel ladite tâche implique une séquence d'étapes réalisées par le MCD (101),
dans lequel le moyen de chargement sans fil du MCD (101) comprend un point de charge sur la TUI (102) conçu pour le placement du MCD (101) et comprenant une connexion de charge et une étiquette NFC (604), et en ce que le système est conçu de telle sorte que l'exécution d'une ou plusieurs desdites tâches est terminée en plaçant le MCD (101) sur le point de charge.

2. Système de communication et de commande (100) selon la revendication 1 dans lequel lesdites tâches comprennent des tâches de notification conçues à la fois pour une exécution manuelle et automatique, dans lequel une exécution manuelle des tâches de notification est obtenue lorsque le MCD (101) est placé à proximité immédiate d'une icône représentant cette tâche de notification, et une exécution automatique est obtenue lorsqu'un ensemble de conditions sont détectées par le MCD (101) tandis que ledit MCD (101) se trouve au niveau du point de charge de la TUI (102).

3. Système de communication et de commande (100) selon la revendication 2, dans lequel pour lesdites tâches de notification l'exécution automatique est réalisée sur la base de règles prédéfinies, lesdites règles comprenant une combinaison de conditions comprenant un ou plusieurs laps de temps, ou changements de signaux recueillis par le MCD (101), ou des signaux qui peuvent être obtenus à partir d'autres dispositifs, et dans lequel lesdites règles définissent des informations d'exécution en fonction de la combinaison desdites conditions.

4. Système de communication et de commande (100) selon l'une quelconque des revendications précédentes, conçu pour répondre aux appels entrants lors de la prise du MCD (101) depuis le point de charge, dans lequel la prise du MCD (101) lance une procédure comprenant l'affichage de l'image de la personne appelant s'il y a une image associée au numéro de l'appelant, la dictée du nom de la personne appelant si un nom est associé au numéro de l'appelant, et la réponse à l'appel lorsqu'un signal est reçu à partir d'un capteur de proximité du MCD (101) indiquant que le MCD (101) a été placé à proximité d'une oreille d'un utilisateur, et conçu en outre pour mettre fin à l'appel lorsque le MCD (101) est placé sur le point de charge de la TUI (102).

5. Système de communication et de commande (100) selon l'une quelconque des revendications précédentes, dans lequel le système est conçu pour une communication avec d'autres dispositifs à proximité du système, lesdits autres dispositifs comprenant un ou plusieurs parmi des dispositifs ménagers, des dispositifs de divertissement, des dispositifs domotiques, des dispositifs de soins personnels et des dispositifs médicaux, dans lequel le système est conçu pour une communication sans fil entre lesdits dispositifs et le MCD (101), ladite communication sans fil comprenant le MCD (101) recevant des informations à partir desdits dispositifs ou du MCD (101) transmettant des instructions d'exécution de tâche auxdits autres dispositifs, et dans lequel une telle communication est activée lorsque le MCD (101) est positionné au niveau du point de charge sur la TUI (102) ou lorsque le MCD (101) est placé à proximité d'icônes sur la TUI (102) représentant une communication avec des dispositifs spécifiques pour l'exécution des tâches de commande respectives.

6. Système de communication et de commande (100) selon l'une quelconque des revendications précédentes, dans lequel le système est conçu pour gérer des informations d'exécution associées à des étiquettes sur la TUI (102) et les images correspondantes de ces étiquettes par l'intermédiaire d'une communication avec un serveur central, dans lequel le MCD (101) est conçu pour communiquer avec le serveur central pour obtenir une mise à jour d'informations d'exécution, dans lequel ladite mise à jour est conçue pour se produire après un changement d'informations d'exécution sur le serveur central, ou à intervalles réguliers sur le placement du MCD (101) près d'une étiquette avant l'exécution d'une tâche.

7. Système de communication et de commande (100) selon l'une quelconque des revendications précédentes, dans lequel l'interface utilisateur tangible, TUI, (102) comprend une base portable légère, des étiquettes NFC (604) positionnées sur la surface de la base, une unité de charge sans fil pour charger un dispositif de communication mobile, MCD (101), une batterie pour fournir de l'énergie à ladite unité de charge sans fil, une interface de charge pour charger ladite batterie, et une couche supérieure, ladite couche supérieure permettant un positionnement correct d'icônes et d'images correspondant auxdites étiquettes NFC (604).

8. Système de communication et de commande (100) selon l'une quelconque des revendications 1 à 6, dans lequel l'interface utilisateur tangible, TUI, (102) comprend un dispositif de recouvrement de tablette, et dans lequel le système de communication et de commande comprend en outre un dispositif de tablette programmé de manière appropriée, dans lequel ledit dispositif de recouvrement comprend des étiquettes NFC (604) positionnées sur une surface du dispositif de recouvrement et configurées pour entrer en contact avec une surface arrière du dispositif de tablette étant la surface opposée à une surface d'affichage de tablette, une unité de charge sans fil pour charger un dispositif de communication mobile, MCD (101), une batterie pour fournir de l'énergie à ladite unité de charge sans fil, une interface de charge pour charger ladite batterie, et dans lequel l'affichage du dispositif de tablette est disposé pour toujours afficher des icônes ou des images correspondant à des tâches différentes au niveau d'une position correspondant à une position des étiquettes NFC (604) pour ces tâches sur le dispositif de recouvrement de la tablette, ce qui permet ainsi l'exécution correcte de tâches correspondant auxdites étiquettes NFC (604), en utilisant ainsi l'affichage de la tablette en tant qu'interface visuelle pour l'indication de tâches.

9. Système de communication et de commande (100) selon l'une quelconque des revendications 1 à 6, dans lequel l'interface utilisateur tangible, TUI, (102) comprend un livret à multiples pages, dans lequel chaque page comprend un ensemble d'images se rapportant à des personnes ou des tâches et un ensemble d'étiquettes NFC (604) correspondant à chacune desdites images.

10. Procédé d'exécution de tâches à l'aide d'un système de communication et de commande (100) selon l'une quelconque des revendications 1 à 8,
le procédé comprenant le placement du MCD (101) à proximité immédiate de l'une des images, l'acquisition d'informations d'étiquette d'une étiquette associée à l'une des images sur la TUI (102), dans lequel lesdites informations d'étiquette se rapportent à au moins une application pour exécution par le MCD (101), la conversion des informations d'étiquette en informations d'exécution, l'extraction d'informations d'identité d'application et des informations de données à partir des informations d'exécution, l'exécution d'au moins une application associée aux informations d'identité d'application, et le lancement de l'exécution d'une tâche associée à l'exécution de l'au moins une application, dans lequel ladite tâche implique une séquence d'étapes réalisées par le MCD (101) et la fin de l'exécution d'une ou plusieurs desdites tâches en plaçant le MCD (101) sur le point de charge de la TUI (102).

11. Procédé selon la revendication 10 dans lequel lesdites tâches comprennent des tâches de notification, le procédé comprenant en outre l'exécution d'une tâche soit manuellement soit automatiquement, une exécution manuelle comprenant le placement du MCD (101) à proximité immédiate de l'icône représentant une notification, et l'exécution automatique comprend la détection d'un ensemble de conditions par le MCD (101) pour déclencher une exécution automatique pendant que ledit MCD (101) se trouve au niveau du point de charge sur la TUI (102).

12. Procédé selon la revendication 11, dans lequel ladite tâche de notification est une tâche d'urgence et dans lequel l'exécution manuelle ou automatique de la tâche d'urgence comprend l'appel d'une séquence de numéros de téléphone actuels, chaque numéro de téléphone correspondant à un aidant, ladite séquence ayant un ordre de priorité, de telle sorte que si un numéro actuel dans la séquence ne répond pas après un intervalle de temps prédéterminé, un numéro suivant est appelé jusqu'à ce qu'un numéro réponde, et dans lequel, lors de la réponse par un aidant, le MCD (101) est commuté en mode haut-parleur.

13. Procédé selon la revendication 12, dans lequel, dans le cadre d'une procédure d'urgence établie par la tâche d'urgence, les aidants sont notifiés par SMS sur l'urgence, dans lequel le message SMS fournit des informations concernant les conditions qui ont déclenché la procédure d'urgence avec une heure et une date, et dans lequel, lors de la fin de la procédure d'urgence, les aidants sont également notifiés par SMS de la fin de la procédure d'urgence par un message SMS qui fournit des informations sur la cause de la fin et du temps.

14. Procédé selon la revendication 13, dans lequel les messages SMS comprennent des informations concernant le temps de début de la tâche d'urgence, le temps de fin de la tâche d'urgence, et des données recueillies par le MCD (101), comprenant un ou plusieurs parmi la luminosité, le changement dans les données de gyroscope MCD (101), la température, le niveau sonore, les données recueillies à partir de dispositifs médicaux qui enregistrent les signes vitaux de l'utilisateur ou un capteur de qualité d'air.

15. Procédé selon la revendication 11, comprenant en outre, lors de la réalisation d'une exécution automatique, la réalisation de l'exécution automatique sur la base de règles prédéfinies, lesdites règles comprenant une combinaison de conditions comprenant un ou plusieurs laps de temps, des changements de signaux recueillis par le MCD (101), ou l'obtention de signaux à partir d'autres dispositifs, et dans lequel lesdites règles définissent des informations d'exécution en fonction de la combinaison desdites conditions.

16. Procédé selon la revendication 10, comprenant la réponse des appels entrants lors de la prise en charge du MCD (101) à partir de la tâche de charge, en affichant une image d'un appelant s'il y a une image associée au numéro de l'appelant, la dictée d'un nom de l'appelant si un nom est associé au numéro de l'appelant, et la réponse à l'appel lorsqu'un signal est reçu à partir d'un capteur de proximité du MCD (101) pour indiquer que le MCD (101) est à proximité d'une oreille d'un utilisateur, et la fin de l'appel lorsque le MCD (101) est placé sur le point de charge de la TUI (102).

17. Procédé selon la revendication 10, comprenant en outre le lancement d'une tâche en récupérant des informations d'exécution de tâche en deux étapes, dans lequel à la première étape le MCD (101) est placé sur une première icône ou image sur la TUI (102) correspondant à une première étiquette, lorsque le MCD (101) récupère des informations d'identité d'application desdites informations d'exécution à l'aide de la première étiquette, et dans lequel à la seconde étape le MCD (101) est placé sur une seconde icône ou image sur la TUI (102) correspondant à une seconde étiquette, et dans lequel le MCD (101) récupère des informations de données desdites informations d'exécution à l'aide de la seconde étiquette.

18. Procédé selon la revendication 10, le procédé comprenant le lancement de la communication audio ou vidéo lors du placement du MCD (101) à proximité d'images ou d'icônes représentant un agent à contacter, dans lequel derrière lesdites icônes ou images se trouvent des étiquettes NFC (604) contenant des informations d'exécution de tâche, et dans lequel lesdites icônes ou images comprennent des icônes ou des images pour un appel téléphonique en direct, pour un appel vidéo en direct, ou pour un message vidéo enregistré pour chacune des personnes qui pourraient être contactées, et dans lequel le placement du MCD (101) sur une image ou une icône qui correspond à une communication vocale avec un agent spécifique lance une tâche d'appel téléphonique à cette personne, le placement du MCD (101) sur une image ou icône qui correspond à la communication vidéo en direct lance une tâche d'appel vidéo en direct à cette personne, et le placement du MCD (101) sur une image ou icône qui correspond au message vidéo lance une tâche de message vidéo vers une personne spécifique, ladite tâche de message vidéo à une personne spécifique comprend l'étape de fourniture d'indication qui indique que l'enregistrement vidéo va commencer, le dispositif d'enregistrement sur le MCD (101) commence l'enregistrement pour une période prédéfinie, lors de l'expiration de ladite période l'enregistrement est stocké en mémoire et est prêt à être transmis à un troisième dispositif, ladite transmission est lancée après une période de temps prédéterminée sauf si la tâche est interrompue par le soulèvement du MCD (101) à l'écart de l'image ou icône correspondante.

19. Procédé selon la revendication 10, le procédé comprenant en outre le MCD (101) en communication sans fil avec d'autres dispositifs à proximité du système, lesdits autres dispositifs comprenant un ou plusieurs parmi des dispositifs ménagers, des dispositifs de divertissement, des dispositifs domotiques, des dispositifs de soins personnels et des dispositifs médicaux, ladite communication comprenant le MCD (101) recevant des informations à partir desdits autres dispositifs ou le MCD (101) transmettant des instructions d'exécution de tâche auxdits autres dispositifs, et dans lequel une telle communication est activée lorsque le MCD (101) est positionné au niveau du point de charge sur la TUI (102) ou lorsque le MCD (101) est placé à proximité d'icônes sur la TUI (102) représentant une communication avec des dispositifs spécifiques pour l'exécution des tâches de commande respectives.

20. Procédé selon la revendication 19, comprenant en outre le lancement de ladite communication soit périodiquement, à des instants définis, soit sur la base de règles prédéfinies, lesdites règles comprenant une combinaison de conditions comprenant un ou plusieurs parmi un laps de temps, une luminosité, une température, un niveau sonore, et dans lequel lesdites règles définissent des informations d'exécution en fonction de la combinaison desdites conditions, et dans lequel ladite communication a lieu uniquement lorsque le MCD (101) se trouve sur le point de charge de la TUI (102).

21. Procédé selon la revendication 10, comprenant en outre le fait que lorsque le dispositif de communication mobile, MCD (101), reste à l'écart du point de charge sur la TUI (102) pendant plus d'une période de temps prédéfinie, le MCD (101) alerte un utilisateur ou un aidant pour replacer le MCD (101) sur le point de charge.
